# EUROPEAN PATENT APPLICATION

(11) **EP 4 383 405 A1**
(43) Date of publication of application: **12.06.2024**
(21) Application number: 23210105.5
(22) Date of filing: 15.11.2023
(51) Int. Cl.: H01M 10/613, H01M 10/6552, H01M 50/284

(54) **ELECTRIC DEVICE WITH PLASTIC MOLDED THEREON**

(30) Priority: 16.11.2022 US 202263425739 P
(71) Applicant: Milwaukee Electric Tool Corporation, Brookfield, WI 53005 (US)
(72) Inventor: ELFERING, James, Antioch, 60002 (US); FASSBENDER, Kyle, Brookfield, 53005 (US); POLAKOWSKI, Mathew, Greenfield, 53228 (US)
(74) Representative: Forresters IP LLP

(57) **Abstract**

An electric device includes a housing, a printed circuit board disposed in the housing, and plastic molded onto at least a portion of the printed circuit board.

## Description

### CROSS-REFERENCE TO RELATED APPLICATIONS

The present application claims priority to U.S. Provisional Patent Application No. 63/425,739, filed November 16, 2022, the entire content of which is incorporated herein by reference.

### FIELD OF THE DISCLOSURE

The present disclosure relates to electric devices. More particularly, the present disclosure relates to electric devices such as battery packs.

### BACKGROUND OF THE DISCLOSURE

Electric devices, such as battery packs include a printed circuit board and at least one battery cell. The printed circuit board includes electrical components that need to be protected from debris that may enter the battery pack. The battery cell is disposed within an interior volume of the battery pack. The battery pack may further include an interior housing that securely disposes the battery cell within the battery pack.

### SUMMARY OF THE DISCLOSURE

The present disclosure provides, in one aspect, an electric device including a housing, a printed circuit board disposed in the housing, and plastic molded onto at least a portion of the printed circuit board.

The present disclosure provides, in another aspect, an electric device including a housing, at least one battery cell disposed in the housing, and plastic molded onto at least a portion of the at least one battery cell.

The present disclosure provides, in another aspect, a method of manufacturing an electric device. The method includes mounting a printed circuit board into a cavity of a mold and injecting molten plastic into the cavity to form a plastic body. The plastic body is molded onto at least a portion of the printed circuit board. The method further includes removing the printed circuit board with the plastic body from the cavity. The plastic is injected into the cavity at a pressure of at least 50 psi.

In some aspects, the printed circuit board may include electrical components mounted thereon, and a plurality of openings defined therein.

In some aspects, the electric device may further comprise: a plurality of battery cells disposed in the housing, a plurality of terminals mounted onto the printed circuit board, and a cell tap assembly having straps, each strap including a post extending through a respective opening of the plurality of openings of the printed circuit board, and each strap including at least one tab engaging one or more of the plurality of battery cells, the cell tap assembly configured to electrically connect the plurality of battery cells to at least one of the electrical components on the printed circuit board.

In some aspects, the plastic may cover at least some of the electrical components on the printed circuit board, and each of the plurality of openings and the posts remains exposed.

In some aspects, the plastic may cover at least some of the electrical components on the printed circuit board, at least a portion of the plurality of terminals, at least a portion of the cell tap assembly, and each of the plurality of openings.

In some aspects, the electric device may include a battery pack.

In some aspects, the at least one battery cell may include a plurality of battery cells, and each battery cell may include an exterior surface and terminals disposed on respective ends of the battery cell.

In some aspects, the plastic may cover the exterior surface of each battery cell and the terminals remain exposed, the plastic may be arranged at least partially between adjacent battery cells of the plurality of battery cells, and the plastic may couple the plurality of battery cells together as a single battery unit.

In some aspects, the plastic may cover a portion of the exterior surface of each battery cell and a portion of each of the terminals, the plastic may be arranged at least partially between adjacent battery cells of the plurality of battery cells, and the plastic may couple the plurality of battery cells together as a single battery unit.

In some aspects, the plastic may cover a portion of the exterior surface of each battery cell and the terminals remain exposed, the plastic may be arranged at least partially between adjacent battery cells of the plurality of battery cells, and the plastic may couple the plurality of battery cells together as a single battery unit.

In some aspects, plastic may be molded onto each battery cell individually, and the plastic may cover a portion of the exterior surface of each battery cell with the terminals remaining exposed.

In some aspects, the plastic molded onto each battery cell may include a plurality of tabs and a plurality of grooves, and each groove may be configured to receive a respective tab from an adjacent battery cell.

In some aspects, the electric device may further comprise at least one heat pipe, the plastic may include an opening configured to receive the at least one heat pipe, and the plastic may cover a portion of the exterior surface of each battery cell, and the plurality of battery cells may be arranged to surround the opening.

In some aspects, the at least one battery cell may include a plurality of battery cells, the plurality of battery cells may include pouch cells, each pouch cell may include a body and at least one terminal tab extending away from the body, and a majority of the body of each pouch cell may be covered by the plastic.

In some aspects, the plastic may be a first plastic, and the electric device may further comprise a second plastic molded onto a least a portion of the pouch cells to cover the first plastic and to form a battery core.

In some aspects, the electric device may further comprise a first printed circuit board coupled to the second plastic by a plurality of tabs formed thereon, a second printed circuit board mounted onto the first printed circuit board, and a third plastic molded onto a least a portion of the second printed circuit board.

In some aspects, the electric device may further comprise a terminal section mounted onto the second printed circuit board, and a fourth plastic molded onto at least a portion of the terminal section, and the fourth plastic may cover at least a portion of the third plastic.

In some aspects, the first plastic, the second plastic, the third plastic, and the fourth plastic may be the same material.

### BRIEF DESCRIPTION OF DRAWINGS

FIG. 1 is a perspective view of a battery pack.
FIG. 2A is a top perspective view of various components disposed within the battery pack of FIG. 1.
FIG. 2B is a bottom perspective view of the components of FIG. 2A.
FIG. 2C is a top view of the components of FIG. 2A.
FIG. 2D is a bottom view of the components of FIG. 2A.
FIG. 2E is an enlarged view of the components of FIG. 2A.
FIG. 3A is a perspective view of a circuit board covered by a plastic body.
FIG. 3B is a top view of the circuit board of FIG. 3A.
FIG. 3C is a bottom view of the circuit board of FIG. 3A.
FIG. 4A is a top view of a circuit board without a plastic body.
FIG. 4B is a bottom view of the circuit board of FIG. 4A.
FIG. 5 is a perspective view of a terminal section.
FIG. 6 is a perspective view of various components disposed within the battery pack of FIG. 1, according to another embodiment of the disclosure.
FIG. 7A is a top view of the components of FIG. 6 with portions removed.
FIG. 7B is a bottom view of the components of FIG. 6.
FIG. 8A is a perspective view of a USB battery covered by a first plastic body.
FIG. 8B is a perspective view of the USB battery of FIG. 8A, the USB battery is covered by a second plastic body.
FIG. 9A is a perspective view of a plurality of battery cells covered by a first plastic body.
FIG. 9B is a perspective view of the plurality of battery cells of FIG. 9A.
FIG. 9C is a perspective view of a plurality of battery cells covered by a second plastic body.
FIG. 9D is a perspective view of the plurality of battery cells of FIG. 9A covered by an exterior housing.
FIG. 10A is a perspective view of a plurality of battery cells partially covered by a plastic body, according to another embodiment.
FIG. 10B is a perspective view of a plurality of battery cells of FIG. 10A.
FIG. 11A is a cross-sectional view of a battery pack, according to another embodiment.
FIG. 11B is a perspective view of a pair of battery cells disposed within the battery pack of FIG. 11A.
FIG. 12A is a cross-sectional view of a battery pack, according to another embodiment.
FIG. 12B is a perspective view of a plurality of battery cells disposed within the battery pack of FIG. 12A.
FIG. 13A is a cross-sectional view of a battery pack, according to another embodiment.
FIG. 13B is a perspective view of a plurality of battery cells disposed within the battery pack of FIG. 13A.
FIG. 14A is a perspective view of a plurality of battery cells, according to another embodiment.
FIG. 14B is a top view of the plurality of battery cells of FIG. 14A.
FIG. 15A is a perspective view of a plurality of battery cells, according to another embodiment.
FIG. 15B is a cross-sectional view of the plurality of battery cells of FIG. 15A.
FIG. 16A is a perspective view of an interior battery housing.
FIG. 16B is a partial view of the interior battery housing of FIG. 16A.
FIG. 17A is perspective view of a first set of battery cells disposed within the interior battery housing of FIG. 16A.
FIG. 17B is a top view of the first set of battery cells of FIG. 17A.
FIG. 18A is a perspective view of a second set of battery cells disposed within the interior battery housing of FIG. 16A.
FIG. 18B is a top view of the second set of battery cells of FIG. 18A.
FIG. 19 is a perspective view of a battery pack with portions removed, according to another embodiment.
FIG. 20A is a perspective view of a pouch cell.
FIG. 20B is a cross-sectional view of the pouch cell of FIG. 20A.
FIG. 21 is a perspective view of a battery core disposed within the battery pack of FIG. 19.
FIG. 22 is a perspective view of various components mounted onto the battery core of FIG. 21.
FIG. 23 is a perspective view of a terminal section covered by a plastic body.
FIG. 24 is a perspective view of a circuit board, according to another embodiment.

Before any embodiments of the disclosure are explained in detail, it is to be understood that the disclosure is not limited in its application to the details of construction and the arrangement of components set forth in the following description or illustrated in the following drawings. The disclosure is capable of other embodiments and of being practiced or of being carried out in various ways. Also, it is to be understood that the phraseology and terminology used herein is for the purpose of description and should not be regarded as limiting.

### DETAILED DESCRIPTION

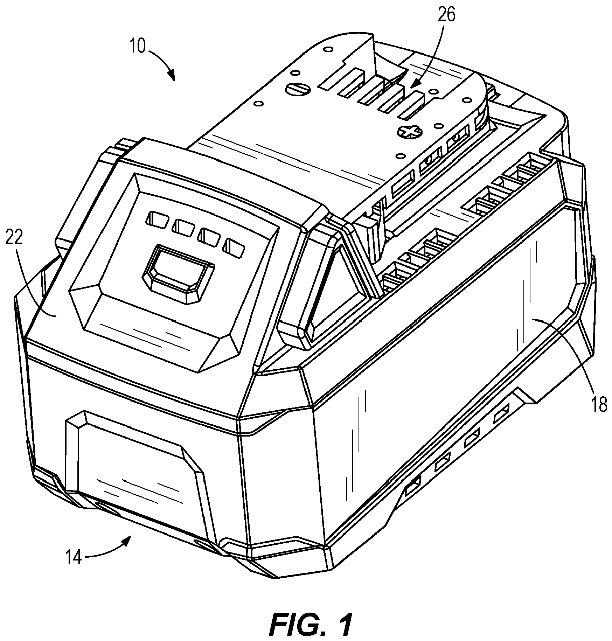

FIG. 1 illustrates a battery pack 10. The battery pack 10 includes a housing 14 formed by a bottom housing 18 and a top housing 22 coupled to the bottom housing 18. The bottom housing 18 is configured to receive and support various internal components of the battery pack 10. The top housing 22 includes an output port 26 configured to be received by an electric device (e.g., power tool), thereby coupling the battery pack 10 to the electric device to provide power. The top housing 22 may be fastened to the bottom housing 18 by a plurality of fasteners (not shown). The battery pack 10 also includes a plurality of battery cells (not shown) disposed within the bottom housing 18. The plurality of battery cells is configured to supply power to the electric device when the battery pack 10 is coupled to the electric device. Each battery cell includes a positive terminal and a negative terminal. The plurality of battery cells may include any of a number of different nominal voltages (e.g., 12V, 18V, etc.), and may be configured having any of a number of different chemistries (e.g., lithium-ion, nickel-cadmium, etc.). The battery cells may be cylindrical, pouches, prismatic, or the like.

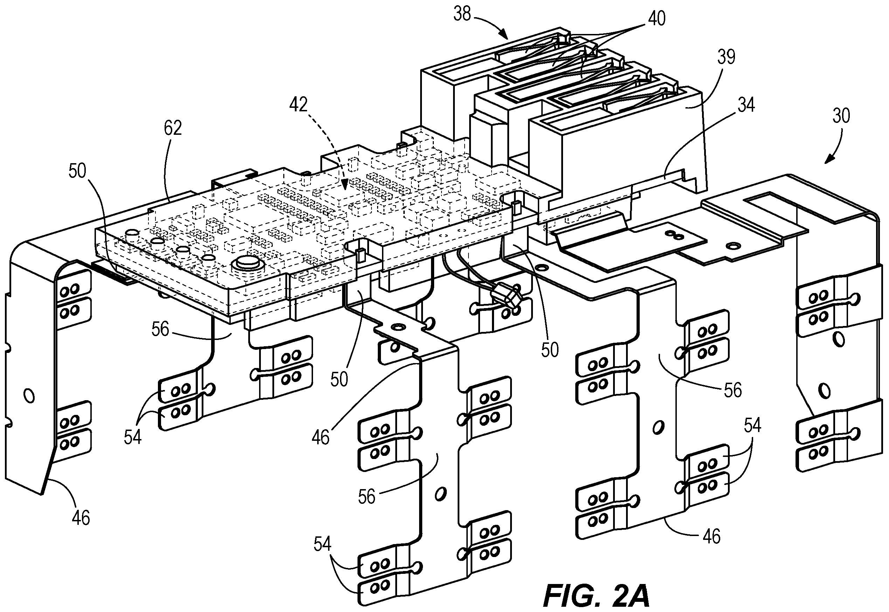

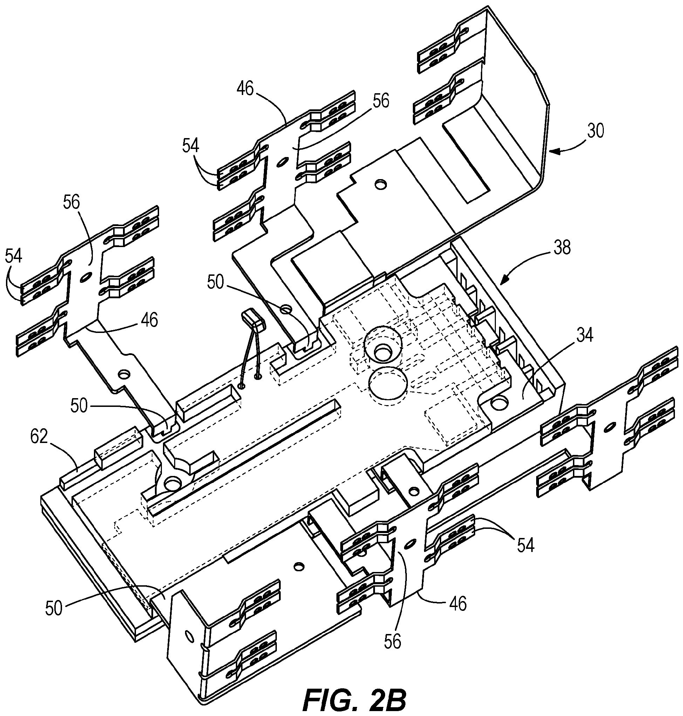

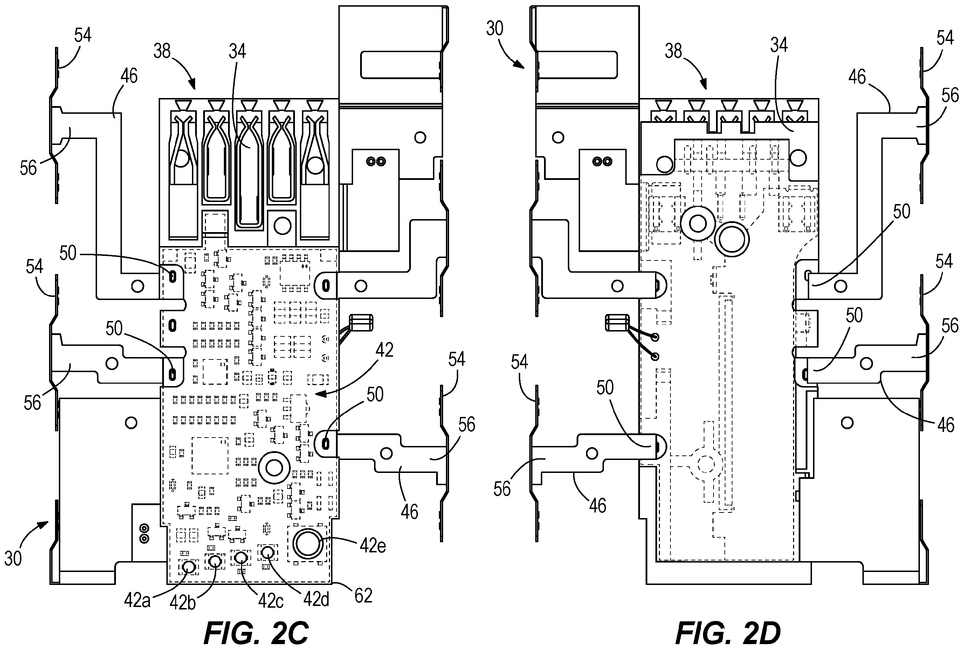

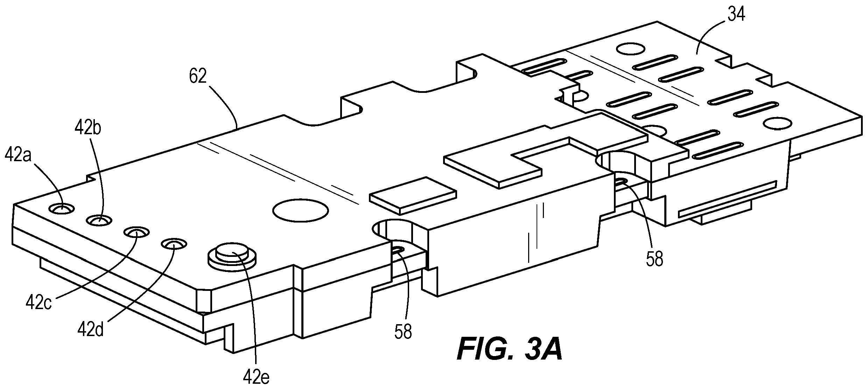

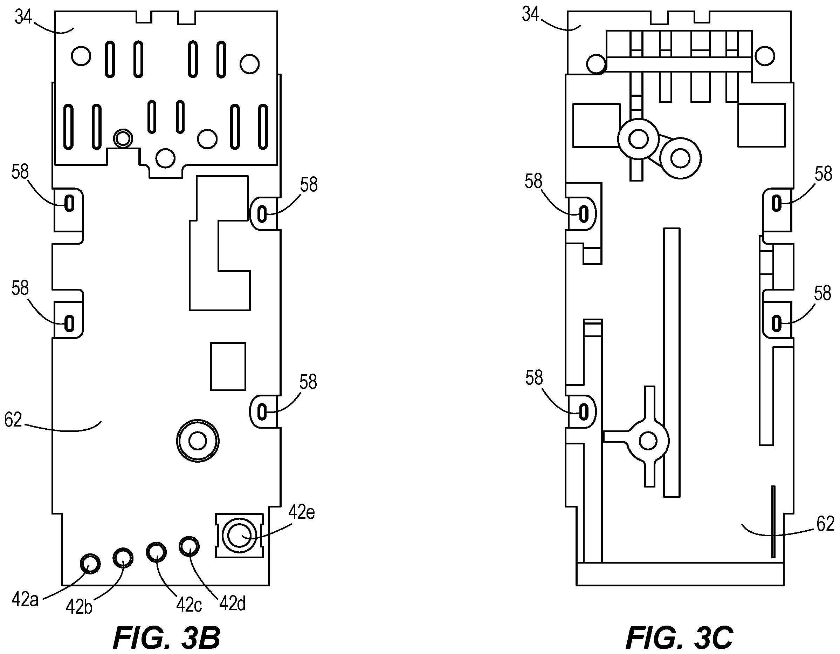

In reference to FIGS. 2A-3C, the battery pack 10 further includes a cell tap assembly 30, a printed circuit board (PCB) 34, and a terminal section 38, which are disposed within the housing 14 of the battery pack 10. The PCB 34 is configured to be disposed above the battery cells and includes a plurality of electrical components 42 (illustrated with broken lines) mounted on a top and bottom side of the PCB 34 by an adhesive or other fastening methods. The electrical components 42 are configured to control the discharging and charging operation of the battery cells. Also, the electrical components 42 are configured to monitor a temperature of the battery cells. The top housing 22 conforms to the profile of the terminal section 38 so that the output port 26 surrounds the terminal section 38. The terminal section 38 includes a terminal housing 39 and a plurality of terminals 40 surrounded by the terminal housing 39. The terminal section 38 is mounted on and electrically connected to the PCB 34 to provide power from the battery cells to the electric device.

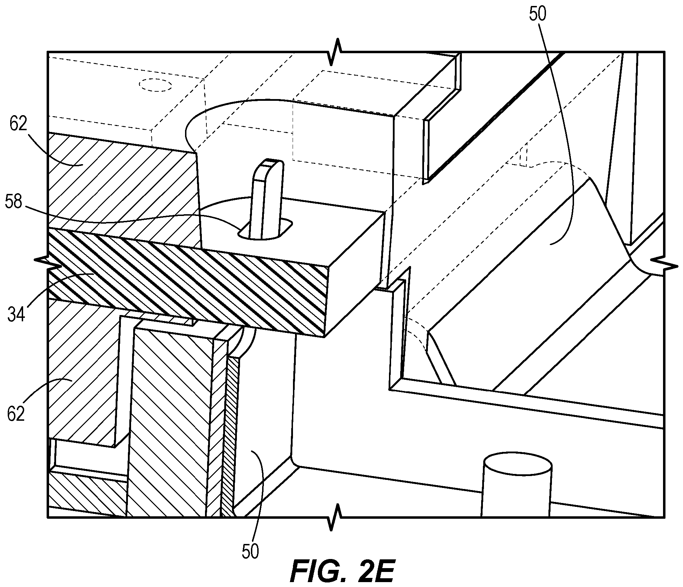

The cell tap assembly 30 includes a plurality of straps 46. Each strap 46 includes a post 50, tabs 54, and a connecting portion 56 configured to connect the post 50 to the tabs 54. The post 50 of each strap 46 is configured to extend through respective openings 58 (FIGS. 2E-3C) defined within the PCB 34. The tabs 54 are configured to engage respective terminals formed on the battery cells. As such, the cell tap assembly 30 is configured to electrically connect the PCB 34 to the plurality of battery cells.

Once the electrical components 42 are mounted on the PCB 34, a plastic body 62 is molded onto at least a portion of the PCB 34. In some embodiments, the plastic body 62 is formed by low pressure over molding (LPOM). Embodiments herein contemplates insert molding, over molding, or any other process of adding liquid plastic to an existing object. During the molding process, the PCB 34 is fixed within a cavity formed within a mold (not shown). The cavity includes features/contours that form the shape of the plastic body 62. The features/contours of the cavity are specifically designed so that the plastic body 62 may cover certain areas of the PCB 34. Plastic is transported within an injection unit (not shown) that is surrounded by a heating mechanism configured to heat up the plastic until molten. The heating mechanism may warm up the plastic at a temperature between 350 to 450 degrees Fahrenheit. The molten plastic is then injected into the cavity of the mold and remains within the mold until the plastic has hardened to form the plastic body 62. In some embodiments, the plastic is injected into the cavity at a low pressure between 50 to 200 psi (345 to 1379 kPa). The PCB 34 is then removed from the cavity of the mold. The plastic material such as polyamide and polyolefin can be used. In other embodiments, the material may include a thermal conductive material to improve the thermal performance of the battery pack 10.

In other embodiments, the PCB 34 may undergo multi-shot molding to form a plastic body made by at least two plastic materials. During the multi-shot molding a first plastic material is injected into a first cavity of a first mold to form a first plastic body that covers a portion of the PCB 34. The PCB 34 and the first plastic body are then transferred to a second cavity of a second mold. A second plastic material may then be injected into the second cavity to form a second plastic body. In one embodiment, the second plastic body may entirely cover the first plastic body and the PCB 34. In another embodiment, the second plastic body may cover a portion of the first plastic body. In an additional embodiment, the first plastic body may cover a portion of the PCB 34. The second plastic body may cover a remaining portion of the PCB 34, as well as the first plastic body. In some embodiments, the second plastic body is made of the same material as the first plastic body. Using multi-shot molding may help with phase change around electrical components 42 that may be hot, thereby reducing the chance of thermal run away from occurring. As such, the plastic body 62 can spread heat produced by the PCB 34 to allow the PCB 34 to operate at cool temperatures, thereby improving reliability.

The cavity of the mold is specifically designed, so that the PCB 34 is not entirely covered by the plastic body 62. For example, in FIG. 2E, the opening 58 remains exposed to the surrounding environment. The post 50 of each strap 46 can still extend through the openings 58 without the plastic body 62 interfering. The portion of the PCB 34 in which the terminal section 38 is mounted on, is also not covered by the plastic body 62. The plastic body 62 covers a top portion and a bottom portion of the PCB 34. Specifically, the plastic body 62 covers areas in which the electrical components 42 are mounted. In addition, a plurality of electrical components 42a-42e may extend through the plastic body 62.

The plastic body 62 is coupled to the PCB 34 without the support of an adhesive because it acts as its own adhesive when coupled to the PCB 34. Also, the plastic body 62 is configured to cover and protect the electrical components 42 from debris and water that may enter the battery pack 10. As such, the plastic body 62 serves as a water-resistant barrier that provides ingress protection, thereby preventing debris and water from contacting and causing damage to the electrical components 42. The plastic body 62 also prevents corrosion from occurring on the PCB 34. Accordingly in some embodiments, the plastic body 62 eliminates the need for covering the PCB 34 with conformal coatings. This improves the timing and consistency in which the battery pack 10 is manufactured. In some embodiments, the manufacturing process of the battery pack 10 will no longer include manually masking the PCB 34 with conformal coatings.

Areas in which the openings 58 are located, may be identified as common corrosion locations due to manually masking and demasking conformal coatings onto these areas of the PCB 34. As such, the conformal coatings may not properly protect the PCB 34 since the conformal coatings are not able to properly cover the precise geometries of the PCB 34. The plastic body 62 eliminates the need for conformal coatings because the plastic body 62 is precisely structured to provide uniform protection. In the illustrated embodiment, the plastic body 62 is purposely structured to surround the openings 58, thereby improving ingress protection of the entire PCB 34.

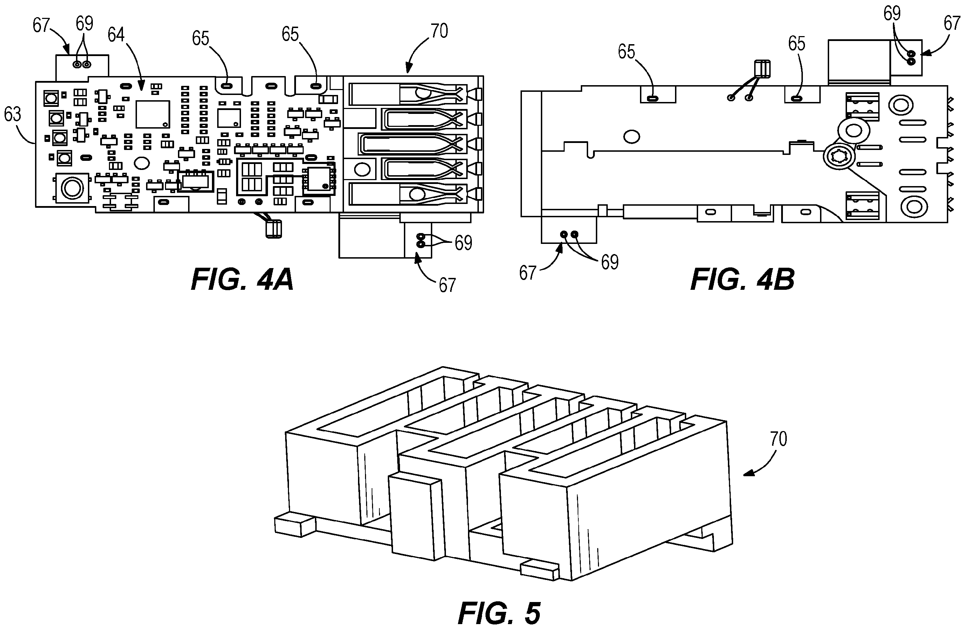

In reference to FIGS. 4A and 4B, another embodiment of a PCB 63 is illustrated. The PCB 63 includes a plurality of electrical components 64 mounted thereon, a plurality of openings 65, and a pair of welding portions 67 provided with electrodes 69. In the illustrated embodiment, a plastic body (not shown) is molded onto at least a portion of the PCB 63 such that a portion of the electrical components 64 are covered. The plurality of openings 65 remain exposed to the surrounding environment, as well as the welding portions 67. Molding the plastic body along the welding portions 67 may cause the electrodes 69 to become dirty and create welding issues.

In reference to FIG. 5, a terminal section 70 is illustrated. The terminal section 70 may be mounted onto the PCB 63. As such, the plastic body is not configured to cover the terminal section 70. Also, the plastic body does not cover the area in which the terminal section 70 is located on the PCB 63.

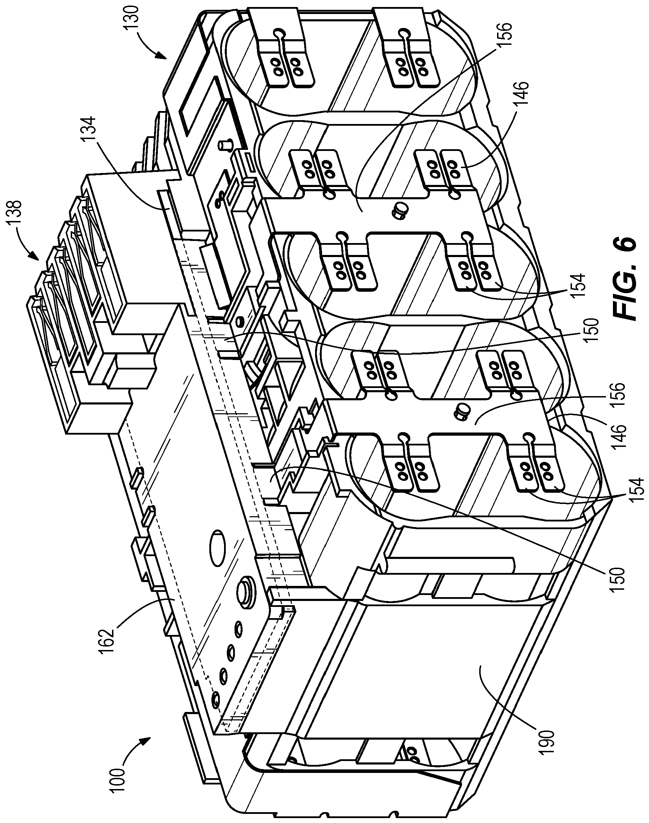

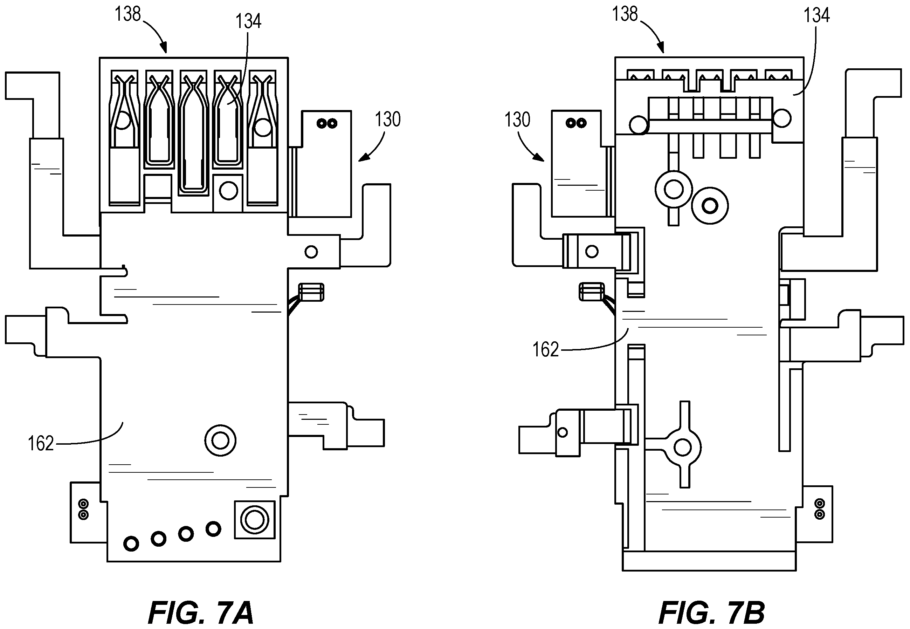

In reference to FIGS. 6-7B, another embodiment of a battery pack 100 is illustrated. The battery pack 100 is similar to the battery pack 10 of FIGS. 1-3C; therefore, like structure will be identified by like reference number plus "100."

The PCB 134 is mounted on top of a battery core 190 that is disposed within the bottom housing of the battery pack 100. The plastic body 162 partially covers the PCB 134 and the cell tap assembly 130. Specifically, the plastic body 162 covers the post 150 of each strap 146 and a portion of the connecting portion 156, as the tabs 154 remain exposed. The post 150 of each strap 146 may be coupled to the PCB 134 by laser welding before molding the plastic body 162 onto the cell tap assembly 130 and the PCB 134. This may eliminate the need for soldering and improve the weld strength between the PCB 134 and the cell tap assembly 130. The time it takes to manufacture the battery pack 100 is also decreased. In addition, the plastic body 162 provides more isolation between adjacent straps 146 to improve ingress protection.

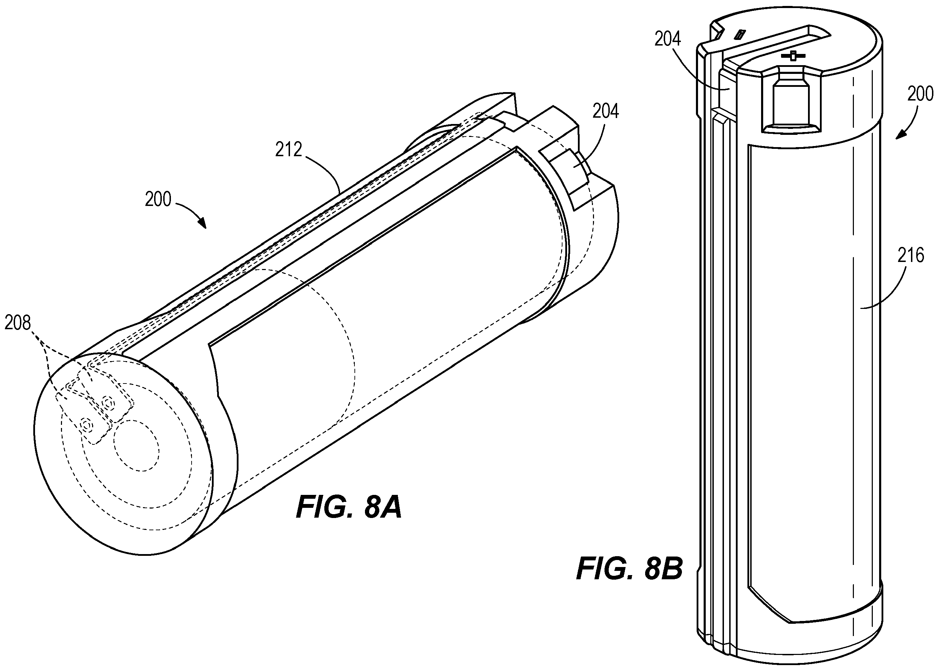

In reference to FIGS. 8A and 8B, a USB battery 200 is illustrated. The USB battery 200 includes an interior housing 204, at least one battery cell (not shown) disposed within the interior housing 204, and cell tap straps 208 surrounding the interior housing 204. The interior housing 204 and the cell tap straps 208 are illustrated with broken lines in FIG. 8A. The USB battery 200 is covered by a first plastic body 212 and a second plastic body 216 formed by multi-shot molding. Specifically, the first plastic body 212 covers the interior housing 204 and the cell tap straps 208 to properly fix the interior housing 204 and the cell tap straps 208 in place. The second plastic body 216 is molded onto the first plastic body 212 to serve as an exterior housing of the USB battery 200. As such, the at least one battery cell can be a 21700-battery cell with a capacity of 5AH. In other embodiments, the USB battery 200 may be covered by a single plastic body.

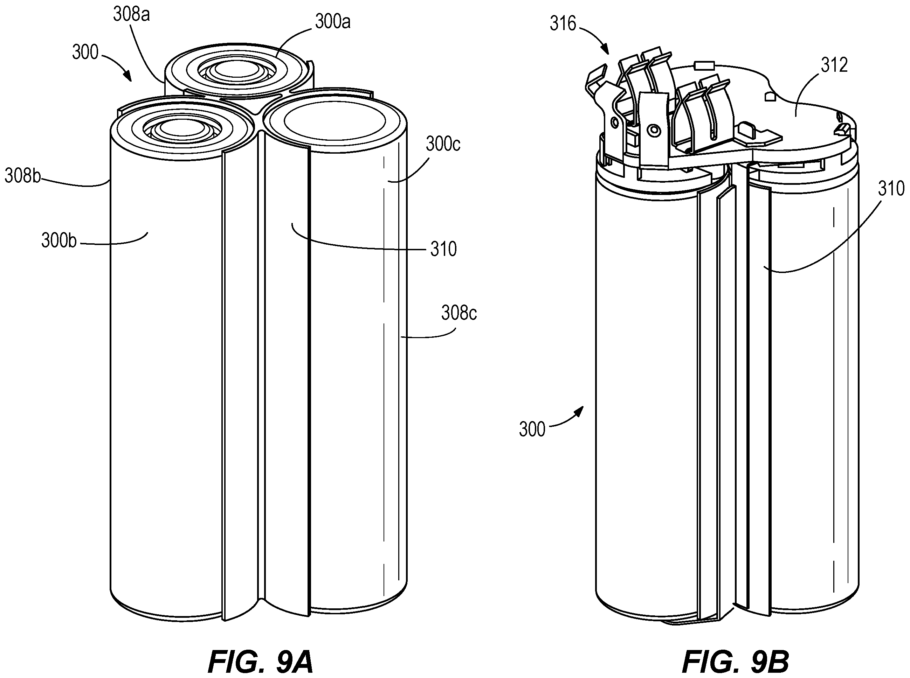

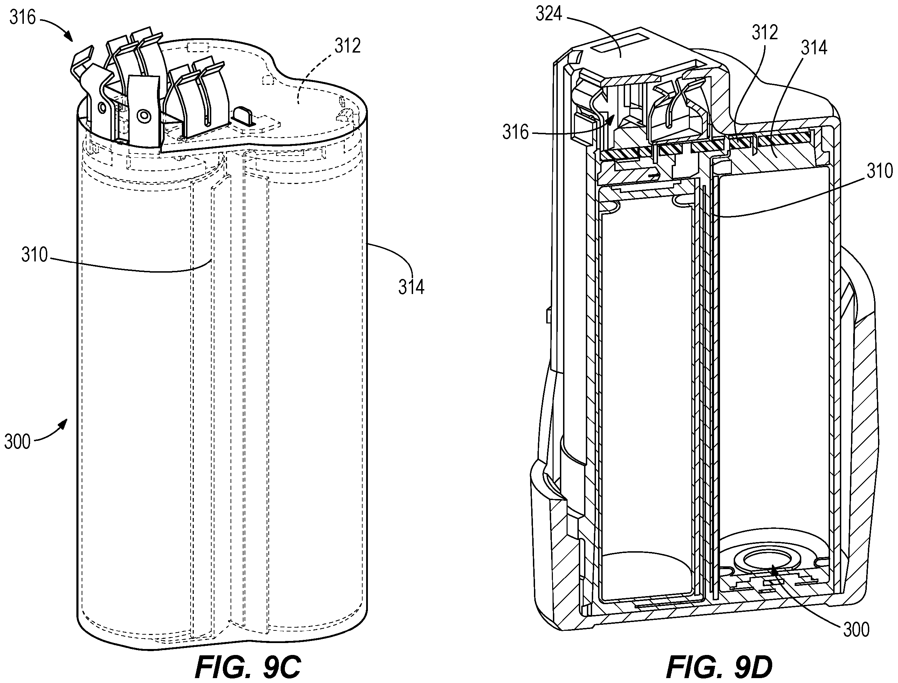

In reference to FIGS. 9A-9D, a plurality of battery cells 300 is illustrated. In the illustrated embodiment, the plurality of battery cells 300 is formed by three battery cells 300a, 300b, 300c. In some embodiments, the plurality of battery cells 300 can be formed by more than three battery cells. Each battery cell 300a, 300b, 300c has an exterior surface 308a, 308b, 308c that serves as a housing for the internal components of each battery cell 300a, 300b, 300c. The battery cells 300a, 300b, 300c are coupled to each other by a first plastic body 310 formed by molding. The first plastic body 310 couples the battery cells 300a, 300b, 300c together to form a single battery unit. The first plastic body 310 is molded onto portions of contacting exterior surfaces 308a, 308b, 308c of adjacent battery cells 300a, 300b, 300c. As such, the first plastic body 310 is arranged between the plurality of battery cells 300.

Once the first plastic body 310 is molded onto the plurality of battery cells 300, the plurality of battery cells 300 are then permanently coupled to each other for the remaining process of manufacturing a battery pack. A PCB 312 and terminals 316 are electrically coupled to the plurality of battery cells 300. The plurality of battery cells 300 undergoes multi-shot molding to couple the battery cells 300, the PCB 312, and the terminals 316 as a single unit. Moreover, the battery cells 300 and the PCB 312 are covered by a second plastic body 314, while the terminals 316 remain exposed. A housing 324 is then disposed around the second plastic body 314 and the terminals 316 to form a battery pack.

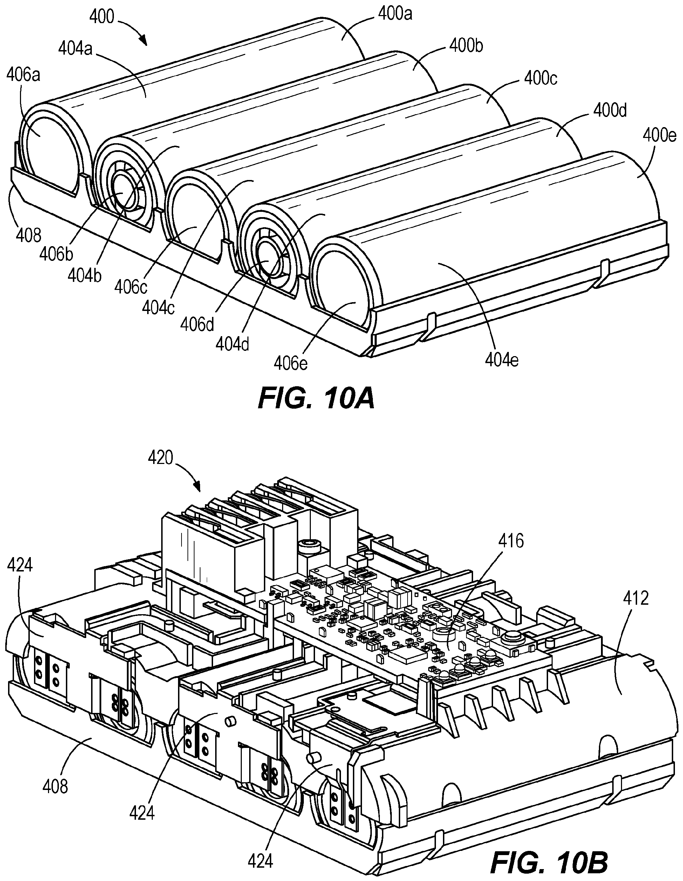

In reference to FIGS. 10A and 10B, another embodiment of a plurality of battery cells 400 is illustrated. In the illustrated embodiment, the plurality of battery cells 400 is formed by five battery cells 400a-400e. In some embodiments, the plurality of battery cells 400 can be formed by less than five battery cells. In other embodiments, the plurality of battery cells 400 can be formed by more than five battery cells. Each battery cell 400a-400e has an exterior surface 404a-404e that serves as a housing for the internal components of each battery cell 400a-400e and terminals 406a-406e formed on respective ends of the battery cells 400a-400e. The battery cells 400a-400e are coupled together by a plastic body 408 formed by molding. The plastic body 408 is molded onto the plurality of battery cells 400 to form a single battery unit. The plastic body 408 is molded between the exterior surfaces 404a-404e of adjacent battery cells 400a-400e. The plastic body 408 is also placed underneath the plurality of battery cells 400 and forms a flat surface such that the battery cells 400 forms a single battery unit arranged in a horizontal-laying position. Also, a portion of the terminals 406a-406e are covered by the plastic body 408.

Once the plurality of battery cells 400 undergoes molding, the plurality of battery cells 400 are then permanently coupled together for the remaining process of manufacturing a battery pack. A battery core 412, a PCB 416, and terminals 420 can then be positioned on top of the plurality of battery cells 400. A cell tap assembly 424 is also provided to electrically connect the plurality of battery cells to the PCB 416.

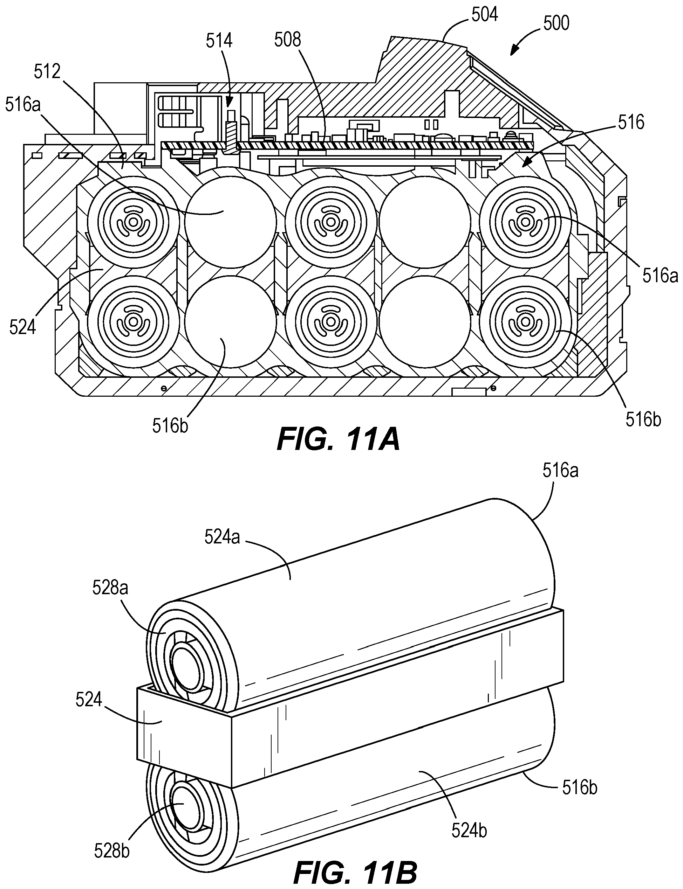

In reference to FIGS. 11A and 11B, another embodiment of a battery pack 500 is illustrated. The battery pack 500 includes a housing 504, a PCB 508, a battery core 512, a terminal section 514, and a plurality of battery cells 516 encased by the battery core 512. The PCB 508 and the battery core 512 are disposed within the housing 504 of the battery pack 500. The plurality of battery cells 516 are arranged in pairs within the battery core 512. Each pair of battery cells 516a, 516b are coupled together by a plastic body 524 formed by molding. The plastic body 524 is arranged between the pair of battery cells 516a, 516b and covers a portion of the exterior surface 524a, 524b that is facing an adjacent battery cell 516, 516b. The plastic body 524 also covers a portion of each terminal 528a, 528b formed on respective ends of each battery cell 516a, 516b.

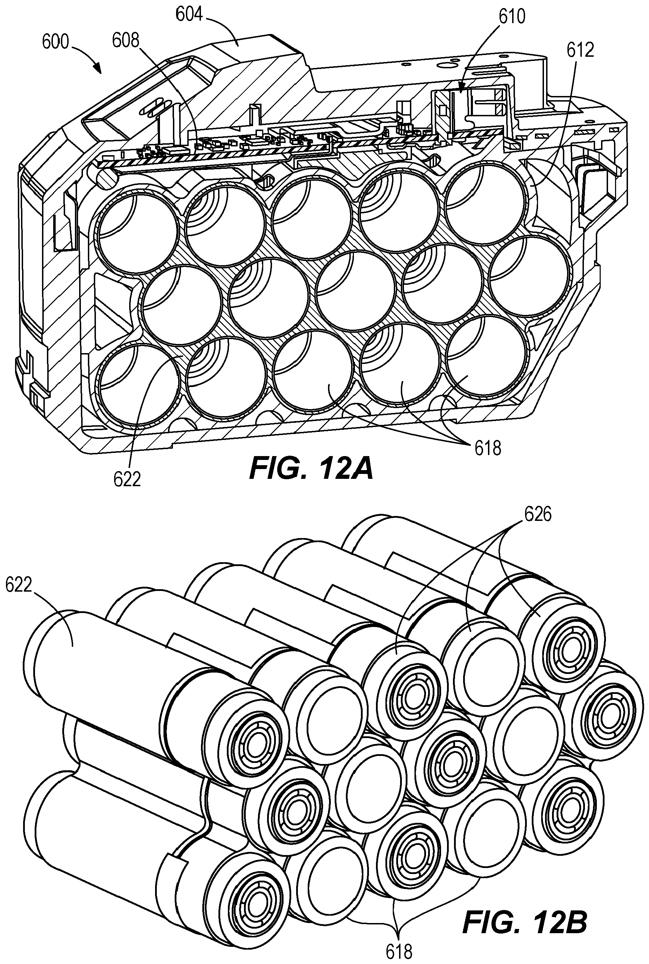

In reference to FIGS. 12A and 12B, another embodiment of a battery pack 600 is illustrated. The battery pack 600 includes a housing 604, a PCB 608, a terminal section 610 mounted on the PCB 608, a battery core 612, and a plurality of battery cells 618 encased by the battery core 612. In the illustrated embodiment, the plurality of battery cells 618 is formed by 15 battery cells. In some embodiments, the plurality of battery cells 618 can be formed by more than 15 battery cells. In other embodiments, the plurality of battery cells 618 can be formed by less than 15 battery cells. The plurality of battery cells 618 is permanently coupled together by a plastic body 622 formed by molding. The plastic body 622 is arranged between adjacent battery cells 618 and around exterior surfaces 626 of battery cells 618 arranged as the outermost facing battery cell. As such, the plastic body 622 eliminates any air gaps that may be formed between adjacent battery cells 618 to improve the thermal performance of the battery pack 600.

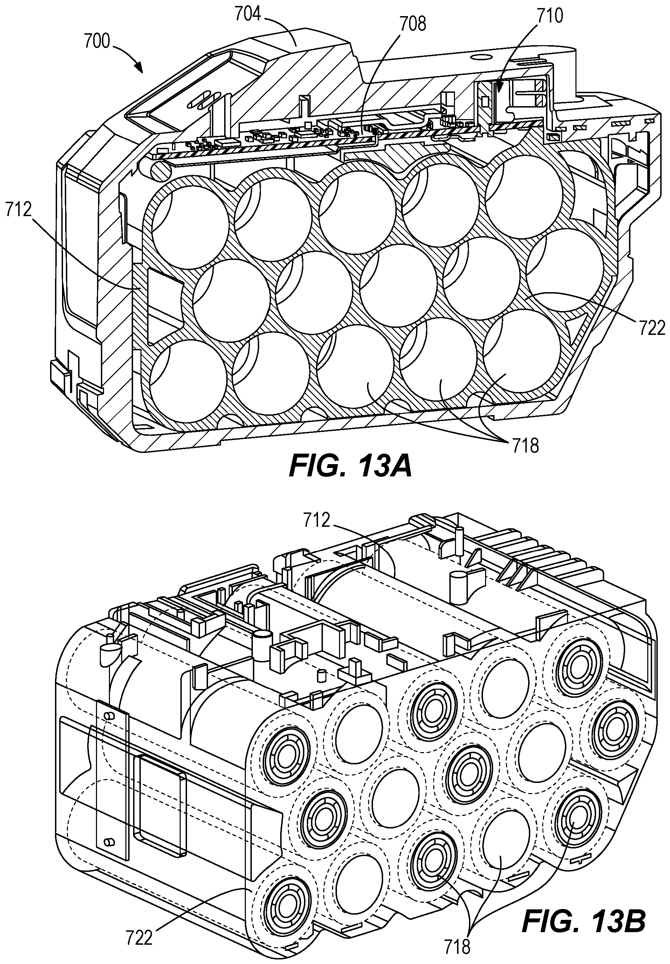

In reference to FIGS. 13A and 13B, another embodiment of a battery pack 700 is illustrated. The battery pack 700 is similar to the battery pack 600 of FIGS. 12A and 12B; therefore, like structure will be identified by like reference number plus "100."

The battery core 712 is formed as a plastic body created by molding. As such, the plurality of battery cells 718 undergoes a multi-shot molding process to form the battery core 712 and the plastic body 722. In the multi-shot molding process, a first material is molded onto the plurality of battery cells 718 and a second material is molded onto the first material to form the battery core 712. During the molding process, other internal components of the battery pack 700 may also be covered by the second material to properly fix components such as the PCB 708 and the terminals 710. In other embodiments, the second material may form fixing components (e.g., tabs) configured to fix the PCB 708 and the terminals 710 onto the battery core 712.

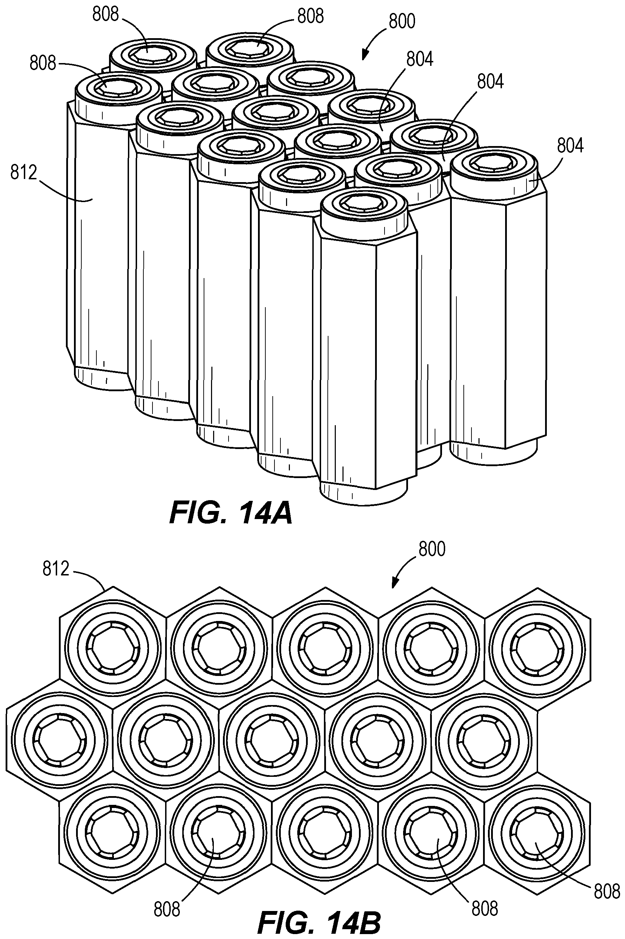

In reference to FIGS. 14A and 14B, another embodiment of a plurality of battery cells 800 is illustrated. Each battery cell 800 includes an exterior surface 804 and terminals 808 formed on respective ends of each battery cell 800. Each battery cell 800 is covered by a respective plastic body 812 formed by molding. Each plastic body 812 covers a portion of the exterior surface 804 of each battery cell 800. Specifically, the plastic body 812 does not extend to each end of the battery cell 800. Also, the plastic body 812 takes the form of a specific geometry. In the illustrated embodiment, the plastic body 812 has a hexagonal shape. In other embodiments, the plastic body 812 may have, but not limited to, a circular shape, a rectilinear shape, or a triangular shape. As each battery cell 800 is covered by a respective plastic body 812, the plurality of battery cells 800 can then be easily stacked and arranged within a housing of a battery pack. Also, each plastic body 812 keeps the battery cells 800 in place when disposed within a battery pack, thereby preventing the rotation of the battery cells 800 to reduce welding failures.

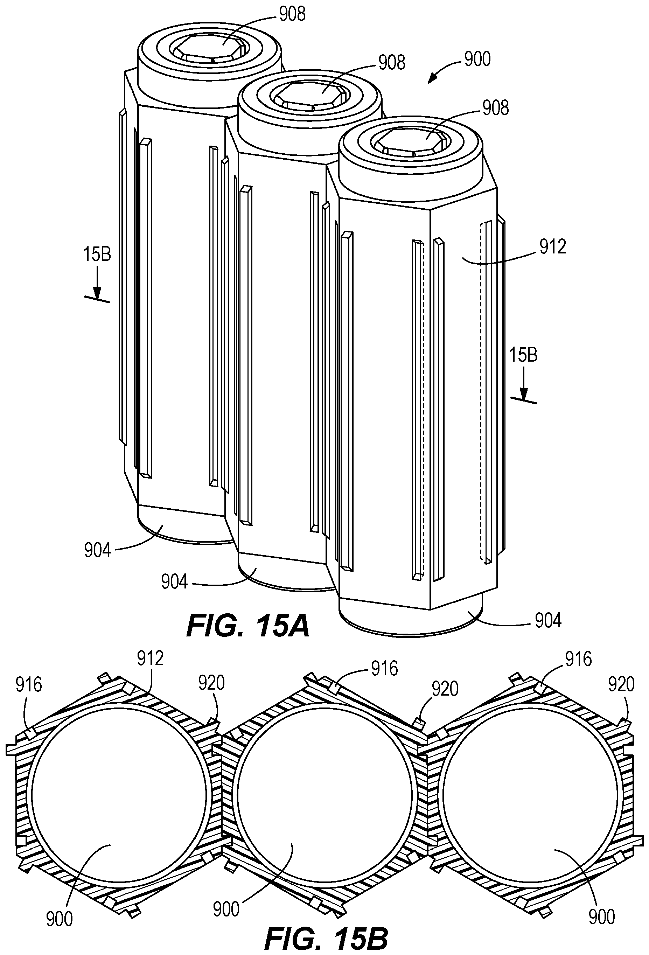

In reference to FIGS. 15A and 15B, another embodiment of a plurality of battery cells 900 is illustrated. The plurality of battery cells 900 is similar to the plurality of battery cells 800 of FIGS. 14A and 14B; therefore, like structure will be identified by like reference number plus "100."

Each plastic body 912 includes a plurality of grooves 916 and a plurality of tabs 920. The plurality of grooves 916 of each plastic body 912 is configured to receive a respective tab from an adjacent battery cell 900. As such, the plurality of battery cells 900 can be physically connected to each other when disposed in a housing of a battery pack.

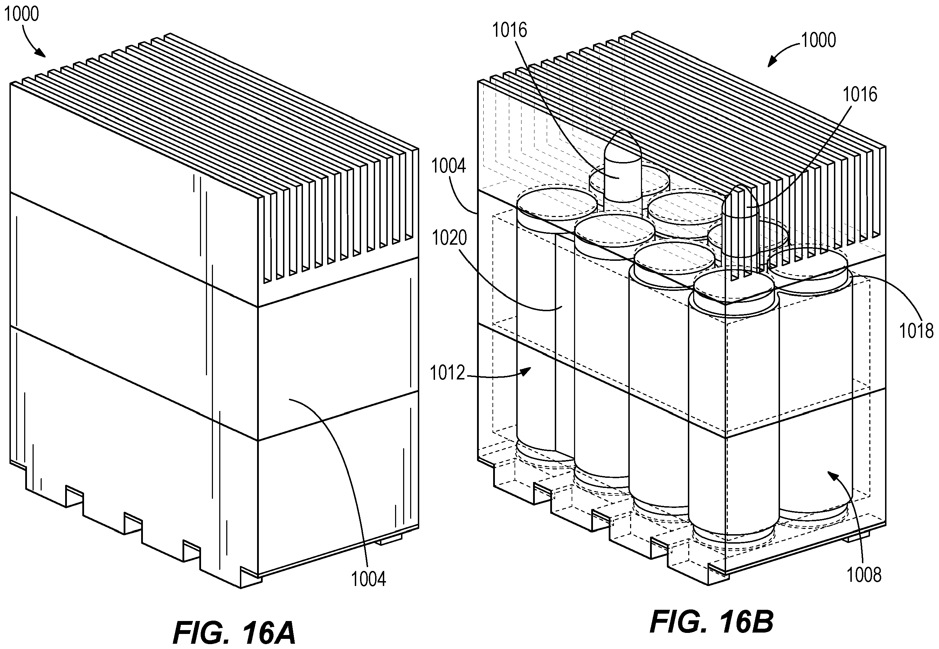

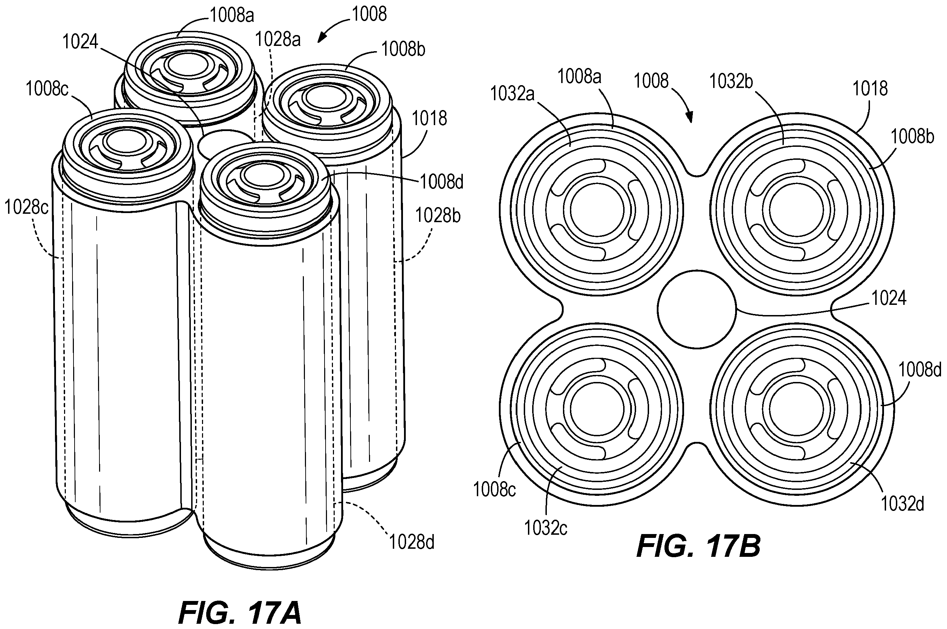

In reference to FIGS. 16A and 16B, an interior battery housing 1000 for a battery pack is illustrated. The interior battery housing 1000 includes a housing 1004, a first set of battery cells 1008, a second set of battery cells 1012, and heat pipes 1016. A respective heat pipe 1016 extends between the first and second sets of battery cells 1008, 1012. The first set of battery cells 1008 is permanently coupled together by a first plastic body 1018. The second set of battery cells 1012 is permanently coupled together by a second plastic body 1020. The first and second plastic bodies 1018, 1020 each have an opening 1024, 1026 (FIGS. 17A-18B) extending through a center of the plastic bodies 1018, 1020. The openings 1024, 1026 are configured to receive a respective heat pipe 1016. The first and second sets of battery cells 1008, 1012 are arranged around the heat pipes 1016 so that each heat pipe 1016 takes heat away from the battery cells 1008, 1012. Also, the first and second plastic bodies 1018, 1020 allow the heat pipes 1016 to be electrically isolated from the battery cells 1008a-d, 1012a-d (FIGS. 17A-18B).

In reference to FIGS. 17A and 17B, the first set of battery cells 1008 is illustrated. Each battery cell 1008a-d of the first set of battery cells 1008 includes an exterior surface 1028a-d and terminals 1032a-d formed on respective ends of each battery cell 1008a-d. The first plastic body 1018 covers the entire exterior surface 1028a-d of each battery cell 1008a-d, while the terminals 1032a-d remain uncovered.

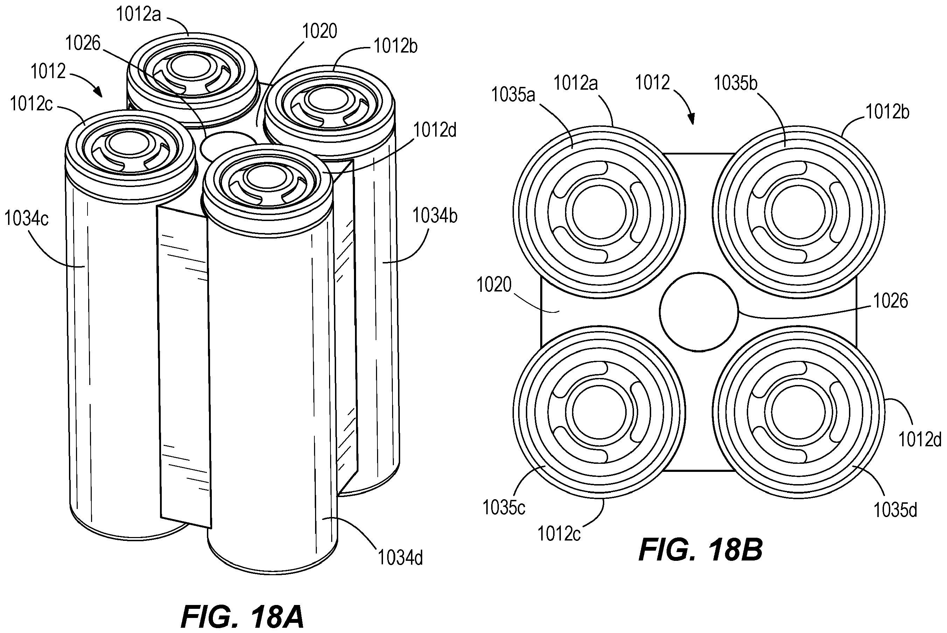

In reference to FIGS. 18A and 18B, the second set of battery cells 1012 is illustrated. Each battery cell 1012a-d of the second set of battery cells 1012 includes an exterior surface 1034b-d and terminals 1035a-d formed on respective ends of each battery cell 1012a-d. The second plastic body 1020 only covers a portion of the exterior surface 1034a-d of each battery cell 1012a-d. Specifically, the second plastic body 1020 covers a portion of each exterior surface 1034a-d that faces adjacent battery cells 1012a-d. When manufacturing the first and second set of battery cells 1008, 1012, each set of battery cells 1008, 1012 is first molded together to respectively form the first and second plastic bodies 1018, 1020. A respective heat pipe 1016 can then be pressed into the first and second sets of battery cells 1008, 1012.

Applying plastic bodies onto the battery cells of FIGS. 8A-18B improves the thermal performance of battery packs and the thermal conduction to an outer housing of a battery pack. The plastic bodies eliminate air gaps between adjacent battery cells. Also, movement of the battery cells within a battery pack may be minimized by the plastic bodies when a battery pack has been dropped or has experienced vibration. In the embodiments of FIGS. 8A-18B that use multi-shot molding, thermal runaway within a battery pack may be prevented. Multi-shot molding may help with phase change in locations around the battery cells.

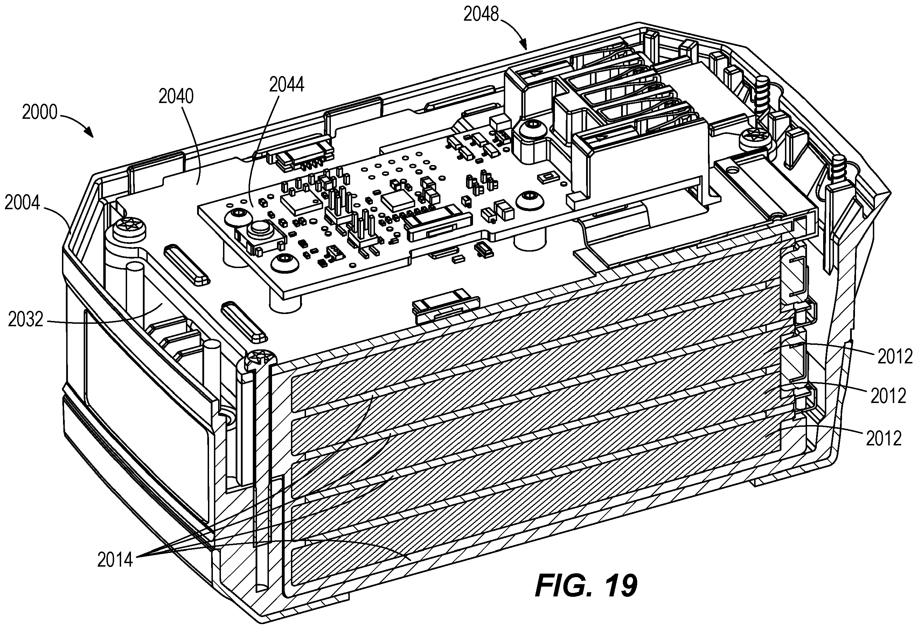

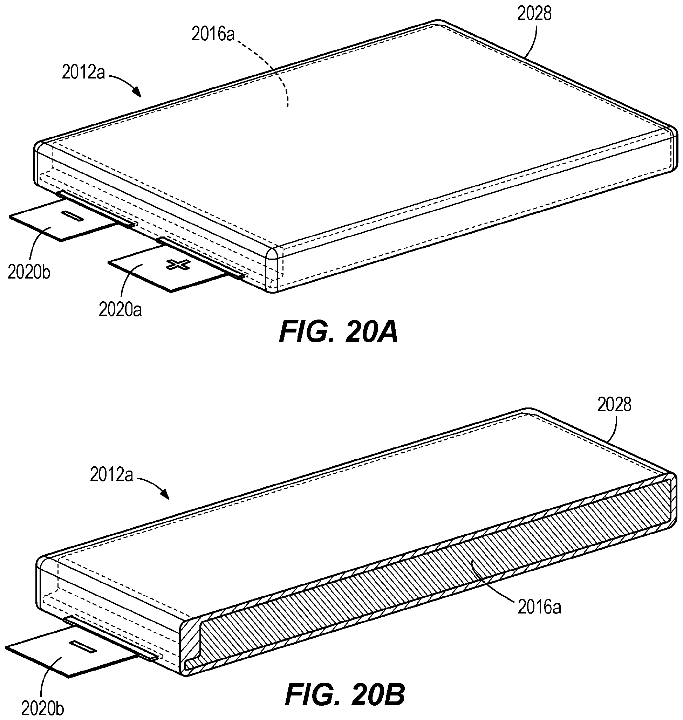

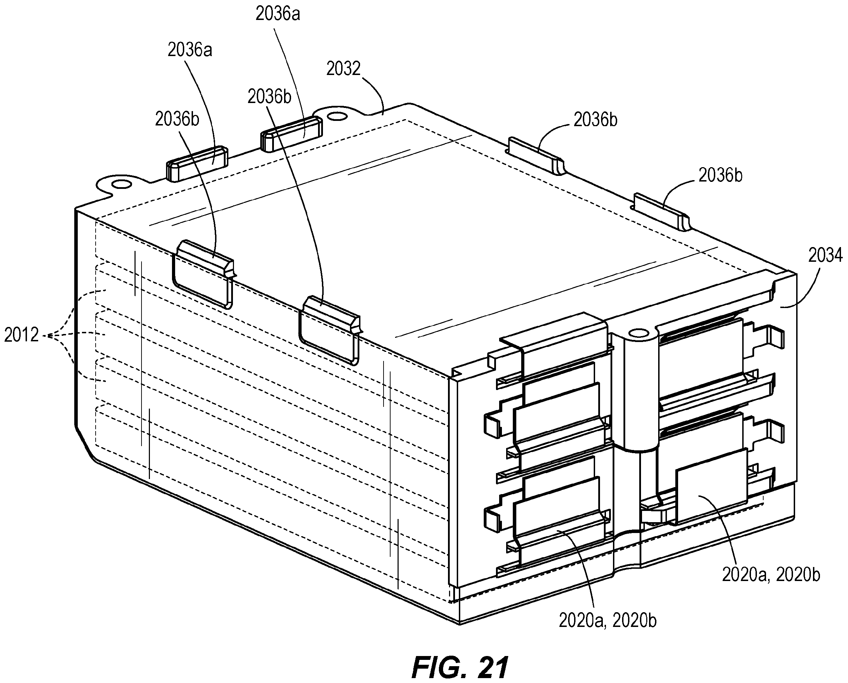

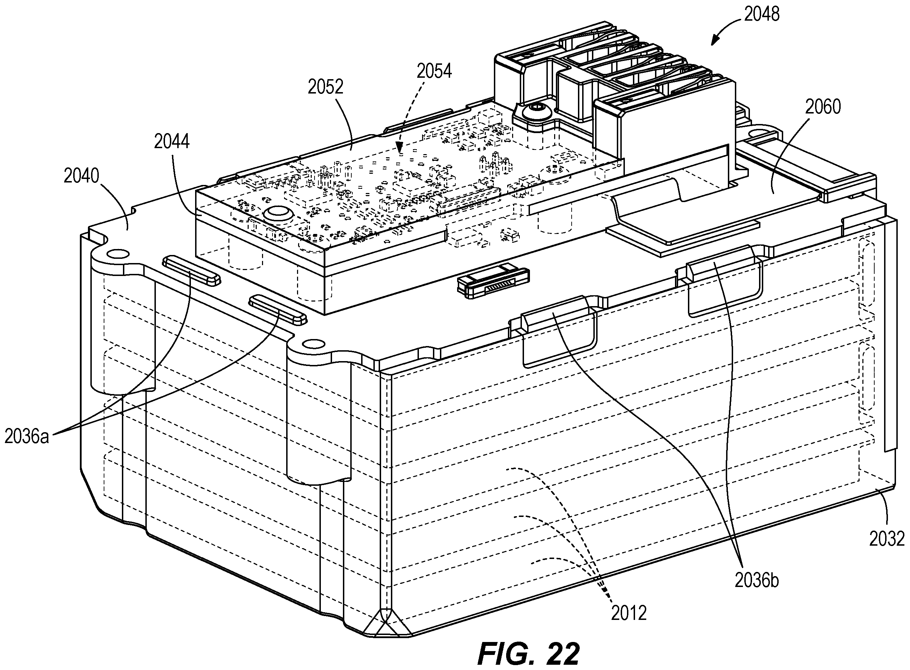

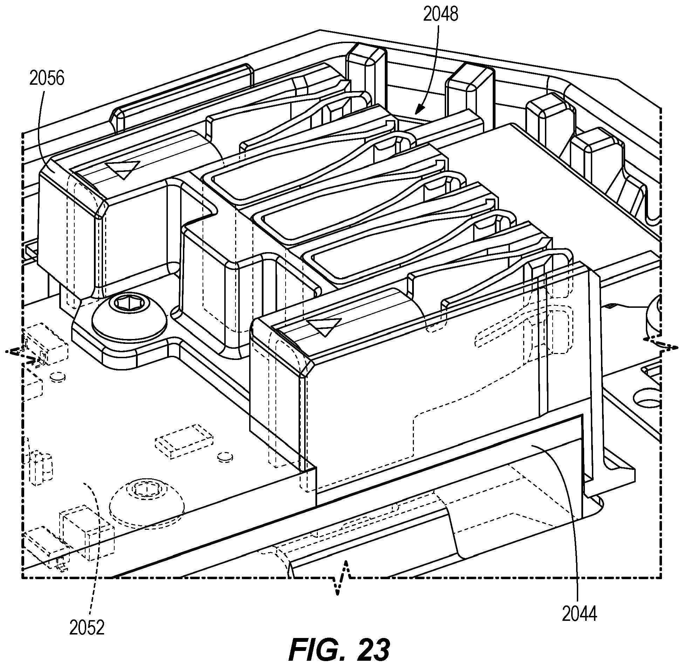

In reference to FIGS. 19-23, another embodiment of a battery pack 2000 is illustrated. Portions of the battery pack 2000 have been removed for clarity. The battery pack 2000 includes a housing 2004, a plurality of battery cells 2012 stacked within the housing 2004, and a plurality of pads 2014 respectively disposed between each battery cell 2012. The plurality of battery cells 2012 are configured to provide power to an electric device coupled to the battery pack 2000. In the illustrated embodiment, the battery cells 2012 are pouch cells.

In some embodiments, each battery cell 2012 may be undergo a molding process. In particular, a battery cell 2012a includes a body 2016a and a pair of cell tabs 2020a, 2020b (i.e., terminal tabs) defined by positive and negative cell tabs. The pair of cell tabs 2020a extend away from the body 2016a. The body 2016a of the battery cell 2012a is covered by a first plastic body 2028 formed by molding. The first plastic body 2028 prevents external forces, produced by vibration and a dropping action, from damaging the body 2016a of the battery cell 2012a. Also, the first plastic body 2028 provides improved dimensional tolerance in comparison to a battery cell without a plastic body. In addition, the first plastic body 2028 provides ingress protection by surrounding and protecting the body 2016a from water and debris that may enter the battery pack 2000.

Once each battery cell 2012 is covered by the first plastic body 2028, the battery cells 2012 are then covered by a second plastic body 2032 formed by molding. The second plastic body 2032 serves as an interior housing, thereby permanently coupling the battery cells 2012 together as a single battery unit. The second plastic body 2032 is formed as a rectangular base that fits within an interior volume of the housing 2004 of the battery pack 2000 and defines an opening (not shown) configured to receive a front plate 2034 that engages the cell tabs 2020a, 2020b of each battery cell 2012. Also, the second plastic body 2032 includes a plurality of tabs 2036a, 2036b extending away from the battery cells 2012.

The battery pack 2000 further includes a first PCB 2040 mounted on the second plastic body 2032, a second PCB 2044 mounted on the first PCB 2040, and terminals 2048 mounted on the second PCB 2044. The terminals 2048 are configured to supply power from the battery cells 2012 to the electric device. Specially, the tabs 2036a formed at an end of the second plastic body 2032 are inserted into openings (not shown) defined within the first PCB 2040 to thereby couple the first PCB 2040 to the second plastic body 2032. The tabs 2036b formed on the sides of the second plastic body 2032 are configured to latch onto sides of the first PCB 2040 to further couple the first PCB 2040 to the second plastic body 2032.

The second PCB 2044 is covered by a third plastic body 2052. As such, a portion of electrical components 2054, mounted on the second PCB 2044, are covered by the third plastic body 2042. In some embodiments, the terminals 2048 are covered by a fourth plastic body 2056. The fourth plastic body 2056 is arranged between each terminal 2048 to form walls around the terminals 2048 and improve isolation of adjacent terminals 2048. The third plastic body 2052 and the fourth plastic body 2056 are both formed by a multi-shot molding process such that the third plastic body 2052 is integral with the fourth plastic body 2056. In other embodiments, the first plastic body 2028, the second plastic body 2032, the third plastic body 2052, and the fourth plastic body 2056 are made of the same material. As such, the third plastic body 2052 is formed to couple the second PCB 2044 to the first PCB 2040 and cell taps 2060 disposed on a side of the second plastic body 2032.

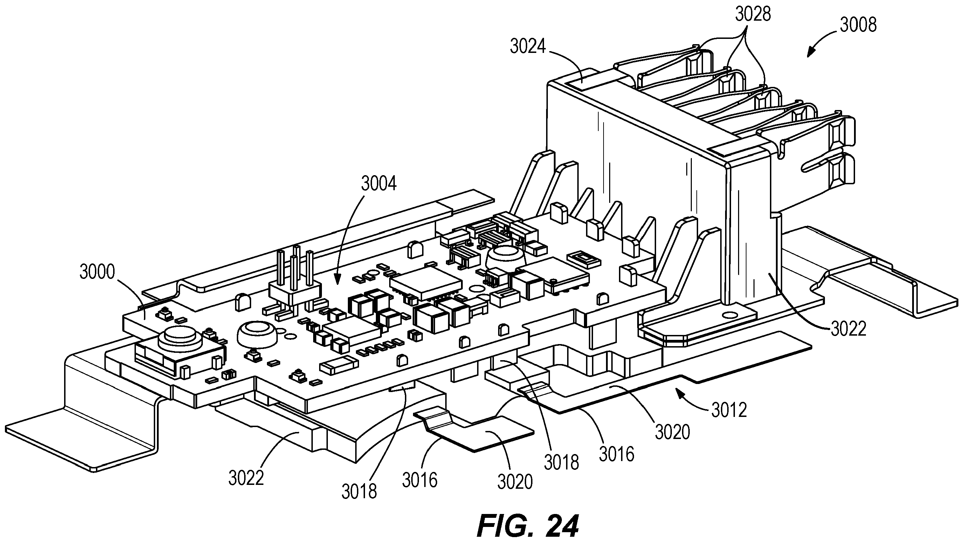

In reference to FIG. 24, a PCB 3000 is illustrated. The PCB 3000 includes a plurality of electrical components 3004 mounted thereon. The PCB 3000 is configured to be disposed within a battery pack (not shown) to control the charging and discharging of battery cells (not shown) within the battery pack. The battery pack also includes a terminal section 3008 and a cell tap assembly 3012. The terminal section 3008 is configured to electrically couple the battery pack to an electric device. The cell tap assembly 3012 includes a plurality of straps 3016 and is configured to electrically couple the battery cells to the PCB 3000. Each strap 3016 includes a post 3018 configured to extend through openings (not shown) defined within the PCB 3000, tabs (not shown) configured to engage the battery cells, and a connecting portion 3020 configured to interconnect the post 3018 and the tabs. A portion of the terminal section 3008 and a portion of the cell tap assembly 3012 are covered by a plastic body 3022. As such, the cell tap assembly 3012 may be isolated further away from the PCB 3000. The plastic body 3022 is also arranged at an end portion 3024 of the terminal section 3008 to position the terminal section 3008 above the PCB 3000 without physically mounting the terminal section 3008 to the PCB 3000. Terminals 3028 of the terminal section 3008 extends from the end portion 3024 and are allowed to move freely since the terminals 3028 are not covered by the plastic body 3022.

Although the disclosure has been described in detail with reference to certain preferred embodiments, variations and modifications exist within the scope and spirit of one or more independent aspects of the disclosure as described. When used in this specification and claims, the terms "comprises" and "comprising" and variations thereof mean that the specified features, steps or integers are included. The terms are not to be interpreted to exclude the presence of other features, steps or components.

### REPRESENTATIVE FEATURES

Representative features are set out in the following clauses, which stand alone or may be combined, in any combination, with one or more features disclosed in the text and/or drawings of the specification.
1. An electric device comprising:
   a housing;
   a printed circuit board disposed in the housing; and
   plastic molded onto at least a portion of the printed circuit board.
2. The electric device of clause 1, wherein the printed circuit board includes
   electrical components mounted thereon, and
   a plurality of openings defined therein.
3. The electric device of clause 2, further comprising:
   a plurality of battery cells disposed in the housing,
   a plurality of terminals mounted onto the printed circuit board, and
   a cell tap assembly having straps, each strap including a post extending through a respective opening of the plurality of openings of the printed circuit board, and each strap including at least one tab engaging one or more of the plurality of battery cells, the cell tap assembly configured to electrically connect the plurality of battery cells to at least one of the electrical components on the printed circuit board.
4. The electric device of clause 3, wherein the plastic covers at least some of the electrical components on the printed circuit board, and each of the plurality of openings and the posts remains exposed.
5. The electric device of clause 3, wherein the plastic covers at least some of the electrical components on the printed circuit board, at least a portion of the plurality of terminals, at least a portion of the cell tap assembly, and each of the plurality of openings.
6. The electric device of clause 1, wherein the electric device includes a battery pack.
7. An electric device comprising:
   a housing;
   at least one battery cell disposed in the housing; and
   plastic molded onto at least a portion of the at least one battery cell.
8. The electric device of clause 7, wherein the at least one battery cell includes a plurality of battery cells, and wherein each battery cell includes an exterior surface and terminals disposed on respective ends of the battery cell.
9. The electric device of clause 8, wherein the plastic covers the exterior surface of each battery cell and the terminals remain exposed, wherein the plastic is arranged at least partially between adjacent battery cells of the plurality of battery cells, and wherein the plastic couples the plurality of battery cells together as a single battery unit.
10. The electric device of clause 8, wherein the plastic covers a portion of the exterior surface of each battery cell and a portion of each of the terminals, wherein the plastic is arranged at least partially between adjacent battery cells of the plurality of battery cells, and wherein the plastic couples the plurality of battery cells together as a single battery unit.
11. The electric device of clause 8, wherein the plastic covers a portion of the exterior surface of each battery cell and the terminals remain exposed, wherein the plastic is arranged at least partially between adjacent battery cells of the plurality of battery cells, and wherein the plastic couples the plurality of battery cells together as a single battery unit.
12. The electric device of clause 8, wherein plastic is molded onto each battery cell individually, and wherein the plastic covers a portion of the exterior surface of each battery cell with the terminals remaining exposed.
13. The electric device of clause 12, wherein the plastic molded onto each battery cell includes a plurality of tabs and a plurality of grooves, and wherein each groove is configured to receive a respective tab from an adjacent battery cell.
14. The electric device of clause 8, further comprising at least one heat pipe, wherein the plastic includes an opening configured to receive the at least one heat pipe, and wherein the plastic covers a portion of the exterior surface of each battery cell, and the plurality of battery cells is arranged to surround the opening.
15. The electric device of clause 7, wherein the at least one battery cell includes a plurality of battery cells, wherein the plurality of battery cells includes pouch cells, wherein each pouch cell includes a body and at least one terminal tab extending away from the body, and wherein a majority of the body of each pouch cell is covered by the plastic.
16. The electric device of clause 15, wherein the plastic is a first plastic, and further comprising a second plastic molded onto a least a portion of the pouch cells to cover the first plastic and to form a battery core.
17. The electric device of clause 16, further comprising:
   a first printed circuit board coupled to the second plastic by a plurality of tabs formed thereon;
   a second printed circuit board mounted onto the first printed circuit board; and
   a third plastic molded onto a least a portion of the second printed circuit board.
18. The electric device of clause 17, further comprising:
   a terminal section mounted onto the second printed circuit board; and
   a fourth plastic molded onto at least a portion of the terminal section, and
   wherein the fourth plastic covers at least a portion of the third plastic.
19. The electric device of clause 18, wherein the first plastic, the second plastic, the third plastic, and the fourth plastic are the same material.
20. A method of manufacturing an electric device, the method comprising:
   mounting a printed circuit board into a cavity of a mold;
   injecting molten plastic into the cavity to form a plastic body, the plastic body molded onto at least a portion of the printed circuit board; and
   removing the printed circuit board with the plastic body from the cavity,
   wherein the plastic is injected into the cavity at a pressure of at least 50 psi.

Thus, embodiments provided herein describe, among other things, systems and methods for electric devices. Various features and advantages are set forth in the following claims.

## Claims

1. An electric device comprising:
a housing;
a printed circuit board disposed in the housing; and
plastic molded onto at least a portion of the printed circuit board.

2. The electric device of claim 1, wherein the printed circuit board includes
electrical components mounted thereon, and
a plurality of openings defined therein.

3. The electric device of claim 2, further comprising:
a plurality of battery cells disposed in the housing,
a plurality of terminals mounted onto the printed circuit board, and
a cell tap assembly having straps, each strap including a post extending through a respective opening of the plurality of openings of the printed circuit board, and each strap including at least one tab engaging one or more of the plurality of battery cells, the cell tap assembly configured to electrically connect the plurality of battery cells to at least one of the electrical components on the printed circuit board.

4. The electric device of claim 3, wherein the plastic covers at least some of the electrical components on the printed circuit board, and each of the plurality of openings and the posts remains exposed, or
wherein the plastic covers at least some of the electrical components on the printed circuit board, at least a portion of the plurality of terminals, at least a portion of the cell tap assembly, and each of the plurality of openings.

5. The electric device of any of the preceding claims, wherein the electric device includes a battery pack.

6. An electric device comprising:
a housing;
at least one battery cell disposed in the housing; and
plastic molded onto at least a portion of the at least one battery cell.

7. The electric device of claim 6, wherein the at least one battery cell includes a plurality of battery cells, and wherein each battery cell includes an exterior surface and terminals disposed on respective ends of the battery cell.

8. The electric device of claim 7, wherein:
the plastic covers the exterior surface of each battery cell and the terminals remain exposed, wherein the plastic is arranged at least partially between adjacent battery cells of the plurality of battery cells, and wherein the plastic couples the plurality of battery cells together as a single battery unit; or
the plastic covers a portion of the exterior surface of each battery cell and a portion of each of the terminals, wherein the plastic is arranged at least partially between adjacent battery cells of the plurality of battery cells, and wherein the plastic couples the plurality of battery cells together as a single battery unit; or
the plastic covers a portion of the exterior surface of each battery cell and the terminals remain exposed, wherein the plastic is arranged at least partially between adjacent battery cells of the plurality of battery cells, and wherein the plastic couples the plurality of battery cells together as a single battery unit.

9. The electric device of claim 7, wherein plastic is molded onto each battery cell individually, and wherein the plastic covers a portion of the exterior surface of each battery cell with the terminals remaining exposed, preferably wherein the plastic molded onto each battery cell includes a plurality of tabs and a plurality of grooves, and wherein each groove is configured to receive a respective tab from an adjacent battery cell.

10. The electric device of claim 7, further comprising at least one heat pipe, wherein the plastic includes an opening configured to receive the at least one heat pipe, and wherein the plastic covers a portion of the exterior surface of each battery cell, and the plurality of battery cells is arranged to surround the opening.

11. The electric device of any of the preceding claims, wherein the at least one battery cell includes a plurality of battery cells, wherein the plurality of battery cells includes pouch cells, wherein each pouch cell includes a body and at least one terminal tab extending away from the body, and wherein a majority of the body of each pouch cell is covered by the plastic.

12. The electric device of claim 11, wherein the plastic is a first plastic, and further comprising a second plastic molded onto a least a portion of the pouch cells to cover the first plastic and to form a battery core.

13. The electric device of claim 12, further comprising:
a first printed circuit board coupled to the second plastic by a plurality of tabs formed thereon;
a second printed circuit board mounted onto the first printed circuit board; and
a third plastic molded onto a least a portion of the second printed circuit board.

14. The electric device of claim 13, further comprising:
a terminal section mounted onto the second printed circuit board; and
a fourth plastic molded onto at least a portion of the terminal section,
wherein the fourth plastic covers at least a portion of the third plastic, and preferably
wherein the first plastic, the second plastic, the third plastic, and the fourth plastic are the same material.

15. A method of manufacturing an electric device, the method comprising:
mounting a printed circuit board into a cavity of a mold;
injecting molten plastic into the cavity to form a plastic body, the plastic body molded onto at least a portion of the printed circuit board; and
removing the printed circuit board with the plastic body from the cavity,
wherein the plastic is injected into the cavity at a pressure of at least 50 psi.
